(19) Europäisches Patentamt / European Patent Office / Office européen des brevets

(11) **EP 4 375 894 A1**

(12) **EUROPEAN PATENT APPLICATION**

(43) Date of publication:
**29.05.2024 Bulletin 2024/22**

(21) Application number: **22020581.9**

(22) Date of filing: **28.11.2022**

(51) International Patent Classification (IPC):
**G06Q 10/04** (2023.01)  **G06Q 30/0202** (2023.01)
**G06Q 50/06** (2024.01)

(52) Cooperative Patent Classification (CPC):
**G06Q 10/04; G06Q 30/0202; G06Q 50/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Linde GmbH
82049 Pullach (DE)**

(72) Inventors:
• **Maier, Alexander
82049 Pullach (DE)**
• **Jarosch, Maximilian
82049 Pullach (DE)**

(74) Representative: **Lu, Jing
Linde GmbH
Intellectual Property EMEA
Dr.-Carl-von-Linde-Straße 6-14
82049 Pullach (DE)**

(54) **A METHOD OF SIZING AND/OR OPERATING A POWER-TO-X-SYSTEM**

(57) The present invention relates to a method of sizing and/or operating a power-to-X-system (100), the power-to-X-system (100) comprising a multitude of subsystems (102, 104, 106, 108, 112, 114, 116, 118, 124, 126) configured to generate and/or process electric energy from an energy source and to convert the generated electric energy into an energy conversion product, the method comprising: formulating as an optimisation problem how to size and/or operate each individual subsystem (102, 104, 106, 108, 112, 114, 116, 118, 124, 126) in order to maximise or minimise at least one specific evaluation parameter characterising performance of the power-to-X-system (100); solving the optimisation problem and determining optimised sizes and/or optimised operation conditions for each subsystem (102, 104, 106, 108, 112, 114, 116, 118, 124, 126); and sizing the subsystems (102, 104, 106, 108, 112, 114, 116, 118, 124, 126) according to the optimised sizes and/or operating the subsystems (102, 104, 106, 108, 112, 114, 116, 118, 124, 126) according to the optimised operation conditions.

Fig. 1

**Description**

The present invention relates to a method of sizing and/or operating a power-to-X-system as well as to a computing unit, a computer program and a machine-readable storage medium.

Background of the invention

Power-to-X-systems, also referred to as P2X-systems, can generate and/or receive electric energy from energy sources, e.g. from renewable energy sources, and can convert and store electric energy, e.g. during periods with an oversupply of variable renewable energy. For example, P2X-systems can convert electric energy to hydrogen (power-to-hydrogen), ammonia (power-to-ammonia), synthetic fuels or e-fuels (power-to-fuel), gases (power-to-gas), synthetic gases (power-to-syngas), liquids (power-to-liquid), methane (power-to-methane), etc.

Disclosure of the invention

The present invention relates to a method of sizing and/or operating a power-to-X-system as well as to a computing unit, a computer program and a machine-readable storage medium for performing the method with the features of the independent claims. Further advantages and embodiments of the invention will become apparent from the description and the appended figures.

The power-to-X-system comprises a multitude of subsystems configured to generate and/or process or receive electric energy from an energy source, particularly a renewable energy source, and to convert the generated electric energy into an energy conversion product, e.g. for storing the generated electric energy. The system can comprise various different subsystems for generating electric energy from a multitude of different energy sources, e.g. from different renewable sources like sunlight, wind, water, geothermal heat, etc. Further, the system can comprise various different subsystems for converting electric energy to different kinds of energy conversion products, e.g. hydrogen, nitrogen, ammonia, synthetic fuels, etc. It shall be understood that the electric energy does not necessarily have to be converted directly into the corresponding energy conversion product, but that the electric energy can be used in order to generate the corresponding energy conversion product. For example, a certain amount of the generated electric energy can be used to perform electrolysis of water in order to generate hydrogen and oxygen as energy conversion products.

The method comprises formulating as an optimisation problem how to size and/or operate each individual subsystem in order to maximise or minimise at least one specific evaluation parameter characterising performance of the power-to-X-system, solving the optimisation problem and determining optimised sizes or unit sizes and/or optimised operation conditions or an optimised operation point for each subsystem. The subsystems are then sized according to the optimised sizes and/or operated according to the optimised operation conditions.

An evaluation parameter of that kind is especially to be understood as a measurable or calculable quantity that allows to evaluate performance or efficiency of the P2X-system. For example, these evaluation parameters can be so called Key Performance Indicators (KPI). For example, different evaluation parameters can correspond to costs, production yield etc. Maximising or minimising a corresponding evaluation parameter particularly refers to an operation of the power-to-X-system in an optimised or best possible manner in the view of this specific parameter.

A computer implemented optimisation is performed by means of formulating and solving the optimisation problem. The corresponding optimisation algorithm particularly evaluates and weights up each possible size and/or operation condition for each individual subsystem against each other, while fulfilling a set of constraints. Particularly, the optimisation algorithm varies the individual subunits' capacities and operation conditions for the subsystem and evaluates the corresponding effects on the evaluation parameters. For example, it can be weighed up what amounts of electric energy generated by means of different power sources can be used to create what amounts of different energy conversion products. Expediently, the optimisation algorithm then determines optimised unit sizes and/or operation conditions for each subsystem such that the entire system can most effectively be operated. The P2X-system can then be sized and constructed according to the determined optimised sizes. Further, the system can be operated by controlling each subsystem according to the individually determined operation conditions and constraints.

The invention is based on the idea of using linear optimisation or programming in order to find an optimum combination of the various subsystems for a power-to-X project, especially for producing green ammonia, green hydrogen, e-fuels or generally any kind of hydrogen derivates. The present invention provides a software tool utilising the corresponding optimisation algorithm in order to find a suitable and optimized solution for the individual subsystem unit sizes and operating the various subsystems for the production of energy conversion products, wherein the term "suitable" especially means that all given constraints for such a complex production scheme are fulfilled, whereas "optimised" especially is to be understood in a way that the solution delivers an optimised set-up in terms of user-defined key performance indicators and their target values.

Conventionally, each single step or subsystem of a P2X-system can be considered and optimised individually and independently from the rest of the system (isolated optimisation). In contrast to that, the present invention allows to consider the various subsystems and their effects on the efficiency of the entire system in dependence of each other. This way, a more effective evaluation of the entire systems and a more efficient yield of the energy conversion product can be achieved.

In conventional ways, a manual Engineer's approach can be applied, wherein unit capacities can be adjusted manually and the oftentimes time-dependent power supply can be split on a constant, e.g. percentual basis, to the individual subsystems. The more complex the system setup and the more constraints have to be fulfilled, the more challenging this approach will be. Experienced engineers might find a solution that fulfils all the constraints, but this might be time intensive and include safety margins in terms of capacity unit sizes. Hence, this approach can lead to a non-optimised solution. In contrast to that, the present invention provides a software tool for automatically finding an optimised solution for the subsystem unit sizes and/or operating mode of the various subsystems in a short amount of time. Based on the available (renewable, non-renewable or mixed) power profile and given boundary conditions and constraints for each individual subsystem, the tool can calculate an optimal setup and integration of each individual subsystem.

The present invention provides a powerful and fast tool to handle huge amounts of data like data points for each single parameter or variable of the various subsystem and to perform optimisation of this amount of data e.g. based on project specific constraints as well as based on conceptual design constraints and constraints regarding the system operation e.g. in order to find competitive system layout or concept. The invention further allows to provide a quick and solid feedback on major questions on how to properly size and/or efficiently operate the power-to-X-system.

Expediently, the software tool can also be used during a dimensioning phase or design phase, during which the power-to-X-system and its components are sized, i.e. before the system is actually constructed. It is for example possible to formulate and solve several different optimisation problems during this design phase, each optimisation problem with a different number of differently constructed subsystems, in order to find an optimum combination of subsystems for an optimum operation of the system. Before construction of the system, the optimisation software tool can therefore be used for sizing the various subsystems in an optimum manner. After constructing the system accordingly, the software tool can be used for determining the optimum operation conditions in advance and/or online. During the conceptual design phase, it can be essential to be aware of all constraints and to consider regional aspects as well as project specific aspects. An optimum integration of all relevant process steps can be evaluated with the optimisation algorithm, especially finding the optimum size of each individual subsystem, e.g. using dedicated process control concepts, processing sequences and deciding whether it is possible to reach project targets even when eliminating one or more of the mentioned subsystems, e.g. individual storage systems. The present software tool can particularly provide a quick and solid feedback on major questions in the conceptual design phase of a project.

In general, the optimisation problem is mathematically formulated in that a solution space $\Omega$, i.e. a set of possible solutions or variables, as well as an objective function $g(\vec{x})$ are determined, whereas the objective function $g(\vec{x})$ can be considered as the process performance KPI (Key Performance Indicator). To solve this optimisation problem, a set of values of variables or solutions $\vec{x} \in \Omega$ is sought such that $g(\vec{x})$ satisfies a given criterion, for example, becomes maximum or minimum. Often, constraints can be specified, whereby admissible solutions $\vec{x} = (x_1,..., x_n)$ must fulfil these specified constraints. Such constraints or boundary conditions can be given in the form of equations or inequalities or describe an explicit set, e.g. only integer values of process parameters. The set of all solutions that satisfies all given boundary conditions is called the admissible set. For example, a so-called mixed integer linear programming (MILP) can be used for formulating and solving the optimisation problem, wherein the objective function is linear and the constraints can be represented by a system of piecewise linear equations and inequalities that also contain integer decisions.

The corresponding optimising algorithm in particular uses matrix and vector-based calculations for the optimisation, for example according to the following formulae:

$$\min_{\vec{x}} g(\vec{x}) = \vec{k}^T \vec{x}; \qquad A \cdot \vec{x} \leq \vec{b}; \qquad A_{eq} \cdot \vec{x} = \vec{b_{eq}}; \qquad \vec{lb} \leq \vec{x} \leq \vec{ub}$$

$A, A_{eq}$ each represent a matrix while $\vec{lb}, \vec{ub}, \vec{k}, \vec{b}, \vec{b_{eq}}$ are vectors. All constraints are particularly implemented in the same way (refer to matrices $A, A_{eq}$ and the vectors $\vec{b}, \vec{b_{eq}}$ above).

According to an embodiment, it is formulated as the optimisation problem how to size and/or operate each individual subsystem in order to minimise costs and/or to maximise a yield of the energy conversion product and/or to minimise a carbon footprint. Costs, yield and carbon footprint are therefore determined as evaluation parameters. Costs can for example comprise operational expenditure (OPEX), e.g. costs for operating the system on a daily basis, and/or capital expenditure (CAPEX), e.g. for installation of the unit, costs for maintenance, repairs, etc. Further, costs can e.g. comprise levelized product costs depending on the energy conversion product, e.g. levelized costs for ammonia (LCOA), levelized costs for hydrogen (LCOH), etc.

According to an embodiment, formulating the optimisation problem further comprises defining constraints regarding the sizing and/or operation of each subsystem and/or regarding properties of each subsystem. Constraints regarding the properties of the subsystems can e.g. refer to a conceptual design, i.e. to conceptually predetermined properties of each subsystem, e.g. a maximum possible energy conversion rate, which can at least theoretically be achieved with a specific subsystem. Constraints regarding the operation of the subsystems can e.g. refer to a predetermined operation range in which the corresponding subsystem is allowed to be operated, e.g. a maximum allowed energy conversion rate, which can be achieved with a specific subsystem without damaging the subsystem.

According to an embodiment, it is defined as a constraint that consumed power is to be lower than available power. For example, an amount of electric energy used for producing the energy conversion products shall always be smaller than an amount of energy generated from the energy sources. It can thus e.g. be prevented that an additional amount of energy is consumed from a power grid, which might lead to unnecessary costs, especially when the system is provided for storing excess energy from renewable power sources.

According to an embodiment, it is defined as a constraint that subsystems are to be operated above or at minimum turndown, e.g. with respective electrical energy demands. The subsystems shall therefore e.g. be operated at least with their respective minimum predetermined capacity.

According to an embodiment, it is defined as a constraint that storage tanks are to be operated between a minimum and maximum operating level. For example, storage tanks for storing generated energy conversion products shall thus not be empty or over-filled.

According to an embodiment, it is defined as a constraint that product flows are to fulfil predetermined production targets. For example, flows of the generated energy conversion products or of other products produced during the energy generation and conversion processes shall exceed predetermined thresholds e.g. on an hourly or a total annular basis in order to achieve the predetermined production targets.

According to an embodiment, the optimisation problem is solved and the optimised sizes and/or the optimised operation conditions are determined in advance for a predetermined time of operation of the power-to-X-system and/or online or on-demand during operation of the power-to-X-system. The optimised operation conditions can thus be determined in advance for a long-term production plan, i.e. before starting operation of the system. The optimisation algorithm can thus e.g. be used for predetermining an optimum production plan for a predetermined period of operation of the system, e.g. an annual operation period on an hourly basis. The optimisation algorithm provides a feasible way to handle the necessary elaborate numerical operations for this purpose and to provide fast results. Later, online during system operation, the optimisation algorithm allows quickly adapting the optimum operation conditions depending on varying external conditions, e.g. with regard to a currently available amount of renewable energy. Also, in this case, the algorithm allows to get fast results in order to quickly react to potentially changing external conditions and/or demands.

According to an embodiment, the power-to-X-system is provided as a green hydrogen, green ammonia and/or e-fuel system configured to generate and/or process electric energy from renewable, non-renewable or mixed energy sources and to convert the generated electric energy into hydrogen (green hydrogen) and/or ammonia (green ammonia) and/or a synthetic fuel as the energy conversion product(s). The optimisation software tool is expediently used in the field of green ammonia and green hydrogen projects with a renewable power profile as main source of power. The renewable profile can e.g. also be supplemented by a power grid import, e.g. according to a power purchase agreement (PPA) or spot market. The energy source for generating the electric energy is particularly a green, renewable energy source, but it is also possible to use pink energy sources (from nuclear power), blue energy sources (carbon capture and utilisation or sequestration), grey or black energy sources (conventional production from fossil-based feedstocks) or other colour production routes.

According to an embodiment, the power-to-X-system comprises one or several of the subsystems explained hereafter. The system can comprise a renewable energy conversion unit configured to generate electric energy from renewable energy sources, e.g. a photovoltaic module, a wind turbine, etc. Further, the system can comprise a battery unit configured to store electric energy. The system can comprise a gas separation unit configured to separate individual gases from a gas mixture, particularly an air separation unit configured to separate nitrogen, oxygen and rare gases from air. These gases can then e.g. be used as educts for creating a different gas, e.g. a synthesis gas. The system can further comprise a hydrogen generation unit configured to generate hydrogen, particularly an electrolysis unit configured to generate hydrogen and oxygen. For example, the electrolysis unit can be configured to perform a polymer electrolyte membrane electrolysis (PEM) or an alkaline water electrolysis (AEL) or the electrolysis unit can be provided as a solid oxide electrolyser cell (SOEC). Further, the system can comprise a hydrogen storage unit configured to store hydrogen, and/or a nitrogen storage unit configured to store nitrogen. The stored hydrogen and nitrogen can then e.g. be used as educts for creating different gases. The system can comprise an ammonia generation unit configured to generate ammonia, particularly by means of the created and stored hydrogen and nitrogen. Furthermore, the system can comprise an ammonia storage unit configured to store the generated ammonia. Further, the system can comprise an e-fuel generation unit configured to generate a synthetic fuel as well as an e-fuel storage unit configured to store a synthetic fuel.

According to an embodiment, the present invention therefore provides a software tool based on linear programming and optimisation in order to find a suitable and optimised solution for the production of green ammonia, green hydrogen, e-fuels or generally power-to-X-products, wherein the term "suitable" means that all given constraints for such a complex production scheme are fulfilled, whereas "optimised" is to be understood in a way that the software tool determines an optimised set-up in terms of total CAPEX and/or total OPEX and/or carbon footprint of the products and/or any other user-defined key performance indicator or target value. Hourly (but also other time pattern) profiles with product generation and feed consumption as well as storage level of each buffer system can be calculated. CAPEX and OPEX figures can be estimated as well as LCOA, LCOH or any levelized product cost, depending on the final P2X-product.

A computing unit according to the invention, for example a control unit of a power-to-X-system is configured, in particular by a computer program, to carry out an inventive method.

The implementation of the invention in the form of software is advantageous because this allows particularly low costs, especially if an executing processing unit is still being used for other tasks and therefore is present anyway. Suitable media for providing the computer program are in particular diskettes, hard drives, flash memory, EEPROM, CD-ROMs, DVDs etc. Downloading a program via computer networks (Internet, intranet, etc.) is possible.

Further advantages and developments of the invention are specified in the description and the associated drawings.

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which

Figure 1     schematically shows a power-to-X-system that can be sized and operated according to an embodiment of the method according to the present invention.

Figure 2     schematically shows an embodiment of the method according to the present invention as a block diagram.

Detailed description

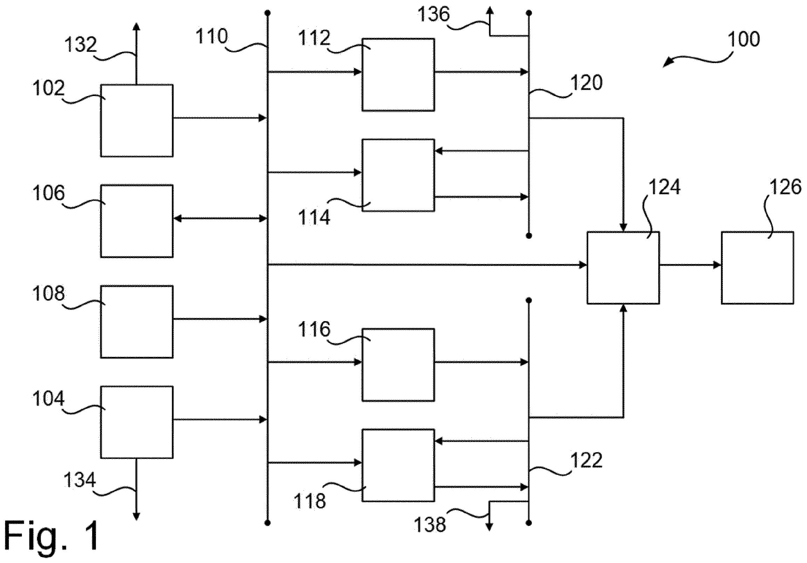

Figure 1 schematically shows a power-to-X-system 100 that can be sized and operated according to an embodiment of the method according to the present invention.

The system 100 comprises a multitude of subsystems 102, 104, 106, 108, 112, 114, 116, 118, 124, 126 configured to generate electric energy from renewable energy sources and to convert the generated electric energy into energy conversion products in order to store the energy.

For example, the system 100 compromises a photovoltaic unit 102 with several photovoltaic modules to convert sunlight into electric energy and a wind turbine unit 104 with several wind turbines to convert kinetic energy of wind in electric energy. Electric energy generated by these subsystems 102 and 104 are fed into an internal or local power grid 110 of the system 100.

The system 100 further comprises a battery unit 106 with several batteries for storing electric energy produced by the photovoltaic unit 102 and the wind turbine unit 104. For this purpose, energy can directly be fed form the grid 110 into the battery unit 106. If necessary, energy can be fed back form the battery unit 106 into the grid 110.

Further, the system 100 can be connected to an external power grid 108 such that electric energy can be imported from the external grid 108, e.g. when the subsystems 102 and 104 yield only little or no electric energy due to corresponding weather conditions.

The system 100 further comprises an electrolysis unit 112 using power from the internal grid 110 in order to perform an electrolyse of water, thus creating hydrogen and oxygen as energy conversion products. Further, the system 100 comprises an air separation unit 116 using power from the internal grid 110 in order to produce nitrogen as an energy conversion product by separating nitrogen from air. The system further comprises a hydrogen storage unit 114 for storing the hydrogen produced by the electrolysis unit 112 as well as a nitrogen storage unit 118 for storing the nitrogen produced by the air separation unit 116.

The system 100 further comprises an ammonia generation unit 124 configured to generate ammonia as an energy conversion product by means of the hydrogen and nitrogen created by the subsystems 112 and 116 as well as by means of electric energy from the internal grid 110. For this purpose, the system 100 can comprise a hydrogen line system 120 for transmitting the hydrogen between the electrolysis unit 112, the hydrogen storage tank 114 and the ammonia generation unit 124 as well as a nitrogen line system 122 for transmitting the nitrogen between the air separation unit 116, the nitrogen storage tank 118 and the ammonia generation unit 124. The system 100 can further comprise an ammonia storage unit 126 for storing the generated ammonia.

Excess energy 132 produced by the photovoltaic unit 102 and excess energy 134 produced by the wind turbine unit 104 can for example be exported to the external power grid. Excess hydrogen 136 produced by the electrolysis unit 112 and excess nitrogen 138 produced by air separation unit 116 can e.g. be supplied to costumers.

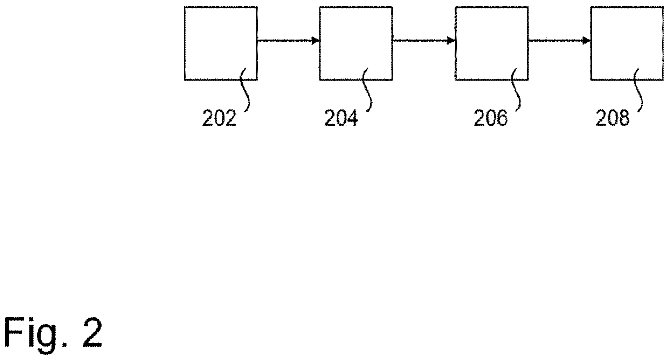

In order to size and/or operate the P2X-system 100 in an optimum manner, a control unit (not shown) of the system 100 is configured, in particular by a computer program, to carry out an embodiment of a method according to the present invention, as shall be explained hereafter with reference to Fig. 2, which schematically shows the embodiment of the method in a block diagram.

In the course of the method, optimised sizes and/or operation conditions for the various subsystems 102, 104, 106, 108, 112, 114, 116, 118, 124, 126 shall be determined in advance for a predetermined time of operation of the power-to-X-system 100, e.g. for an annual operation period on an hourly basis.

In step 202, as an optimisation problem it is formulated how to define the unit sizes and how to operate each individual subsystem in order to maximise or minimise specific evaluation parameters characterising a performance of the power-to-X-system 100. In particular the optimisation problem is formulated in order to minimise each of an operational expenditure (OPEX), a capital expenditure (CAPEX), levelized costs for ammonia (LCOA) and levelized costs for hydrogen (LCOH), in order to maximise a yield of the produced ammonia, and in order to minimise a carbon footprint.

The levelized costs for ammonia LCOA can e.g. be determined by means of the following formula:

$$LCOA = (1/NH3_{total}) * (OPEX + CRF * CAPEX + O\&M_{adder} * CAPEX - Sale_{EP})$$

In this formula, $NH3_{total}$ is the total amount of ammonia produced, $O\&M_{adder}$ represents the costs for operations and maintenance, and $Sale_{EP}$ represents the amount of money gained by exporting and selling excess power or generally any byproduct credit, e.g. oxygen or steam. Further, $CRF$ is a capital recovery factor, representing the sum of weighted average cost of capital (WACC) and return on capital employed (ROCE), i.e. representing capital costs and margin.

In order to formulate the optimisation problem, an objective function $g(\vec{x})$ is defined, wherein a set of values of variables or solutions $\vec{x} \in \Omega$ is sought such that $g(\vec{x})$ satisfies a given criterion, for example, becomes minimum. The admissible solutions are defined as a vector, $\vec{x} = (x_1,..., x_n)$, wherein the various vector entries $(x_1,..., x_n)$ represent different operation conditions of the different subsystems.

For example, the vector entries can describe a power produced by the photovoltaic unit 102 and fed into the internal grid 110 in each hour of the one-year-operation period, i.e. the vector $\vec{x}$ comprises 8760 different entries for the power of the photovoltaic modules 102.

Further, the vector entries can describe a power produced by the wind turbine unit 104 and fed into the internal grid 110 at each hour of the one-year-operation period, i.e. the vector $\vec{x}$ can further comprise 8706 different entries for the power of the wind turbines 104.

Further, the vector $\vec{x}$ can comprise corresponding entries for power saved from the internal grid 110 into the battery unit 106 per hour of the annular period and corresponding entries for power fed from battery unit 106 into the internal grid 110 per hour of the annular period.

The vector $\vec{x}$ can further comprise corresponding entries for each hour of the annular period for the energy imported from the external grid 108 as well as for the energies consumed by the electrolysis unit 112, the hydrogen storage unit 114, the air separation unit 116, the nitrogen storage unit 118, and the ammonia unit 124.

Further, the vector $\vec{x}$ can comprise corresponding hourly entries for the capacities of the photovoltaic unit 102, the wind turbine unit 104, the battery unit 106, the electrolysis unit 112, the hydrogen storage unit 114, the air separation unit 116, the nitrogen storage unit 118, and the ammonia unit 124.

The vector $\vec{x}$ can further compromise corresponding hourly entries for the annular period for the amount of hydrogen produced by electrolysis unit 112, the amount of hydrogen stored in the hydrogen storage unit 114, the amount of hydrogen taken from the hydrogen storage unit 114, the amount of nitrogen produced by air separation unit 116, the amount of nitrogen stored in the nitrogen storage unit 118, the amount of nitrogen taken from the nitrogen storage unit 118, the amount of hydrogen nitrogen delivered to the ammonia unit 124, the amount of nitrogen delivered to the ammonia unit 124, and the amount of ammonia produced by the ammonia unit 124.

Further, the vector $\vec{x}$ can compromise corresponding entries for each hour for the amounts of excess energies 132 and 134, excess hydrogen 136 and excess nitrogen 138.

In step 204, constraints are defined within the optimisation problem regarding the sizes, operation and properties of specific subsystems, wherein admissible solutions $\vec{x} = (x_1,..., x_n)$ must fulfil these specified constraints.

For example, it can be defined as a constraint that the sum of the power fed from the photovoltaic unit 102 into the internal grid 110 and the excess energy 132 from the photovoltaic unit 102 has to be smaller than or equal to the capacity of the photovoltaic unit 102 multiplied with a specific power profile of the photovoltaic unit 102.

Accordingly, it can be defined as a constraint that the sum of the power fed from the wind turbine unit 104 into the internal grid 110 and the excess energy 133 from the wind turbine unit 104 has to be smaller than or equal to the capacity of the wind turbine unit 104 multiplied with a specific power profile of the wind turbine unit 104.

It can further be defined as constraints that each of the battery unit 106, the hydrogen storage unit 114 and the nitrogen storage unit 118 has to be operated between a respective minimum operating level and a respective maximum operating level.

Further, it can be defined as constraints that the ratio of hydrogen and nitrogen fed to the ammonia unit 124 has to follow a required stoichiometric ratio for the ammonia synthesis reaction.

As another constraint it can be defined that a dynamic ramp rate of the ammonia unit 124 has to be less than or equal to e.g. 1% per minute.

Further, it can be defined as a constraint that the sum of all the amount of ammonia produced by the ammonia unit 124 equals to the yield and the total amount of ammonia produced as energy conversion product.

In step 206, the optimisation problem is solved and optimised unit sizes and operation conditions are determined for each subsystem. Therefore, optimised operation points on an hourly basis for the predetermined annular operation period of the system 100 are determined.

In step 208, the system 100 is designed and constructed according to the optimised unit sizes and then the subsystems are operated and controlled according to the optimised operation conditions. During this operation of the system 100, the optimisation problem can again be solved in order to determine updated operation conditions on-demand and online such that the optimum operation conditions can be adapted depending on varying external conditions, e.g. varying weather conditions influencing the actual amount of energies created by means of the photovoltaic unit 102 and the wind turbine unit 104.

List of reference signs

|     |                                                  |
| --- | ------------------------------------------------ |
| 100 | power-to-X-system                                |
| 102 | photovoltaic unit                                |
| 104 | wind turbine unit                                |
| 106 | battery unit                                     |
| 108 | external power grid                              |
| 110 | internal power grid                              |
| 112 | electrolysis unit                                |
| 114 | hydrogen storage tank                            |
| 116 | air separation unit                              |
| 118 | nitrogen storage tank                            |
| 120 | hydrogen line system                             |
| 122 | nitrogen line system                             |
| 124 | ammonia generation unit                          |
| 126 | ammonia storage unit                             |
| 132 | excess energy produced by the photovoltaic unit 102 |
| 134 | excess energy produced by the wind turbine unit  |
| 136 | excess hydrogen produced by the electrolysis unit 112 |
| 138 | excess nitrogen produced by air separation unit 116 |

202 to 208    method steps

**Claims**

1. A method of sizing and/or operating a power-to-X-system (100), the power-to-X-system (100) comprising a multitude of subsystems (102, 104, 106, 108, 112, 114, 116, 118, 124, 126) configured to generate and/or process electric energy from an energy source and to convert the generated electric energy into an energy conversion product, the method comprising:

   formulating (202) as an optimisation problem how to size and/or operate each individual subsystem (102, 104, 106, 108, 112, 114, 116, 118, 124, 126) in order to maximise or minimise at least one specific evaluation parameter characterising performance of the power-to-X-system (100);
   solving (206) the optimisation problem and determining optimised sizes and/or optimised operation conditions for each subsystem (102, 104, 106, 108, 112, 114, 116, 118, 124, 126); and

sizing (208) the subsystems (102, 104, 106, 108, 112, 114, 116, 118, 124, 126) according to the optimised sizes and/or operating (208) the subsystems (102, 104, 106, 108, 112, 114, 116, 118, 124, 126) according to the optimised operation conditions.

**2.** The method according to claim 1, wherein it is formulated as the optimisation problem how to size and/or operate each individual subsystem (102, 104, 106, 108, 112, 114, 116, 118, 124, 126) in order to minimise costs and/or to maximise a yield of the energy conversion product and/or to minimise a carbon footprint.

**3.** The method according to claim 1 or 2, wherein formulating (202) the optimisation problem further comprises:
defining (204) constraints regarding the sizing and/or operation of each subsystem (102, 104, 106, 108, 112, 114, 116, 118, 124, 126) and/or regarding properties of each subsystem (102, 104, 106, 108, 112, 114, 116, 118, 124, 126).

**4.** The method according to claim 3, wherein one or several of the following constraints are defined:

consumed power is to be lower than available power;
subsystems (102, 104, 106, 108, 112, 114, 116, 118, 124, 126) are to be operated above or at minimum turndown;
storage tanks (106, 114, 118, 126) are to be operated between a minimum and
maximum operating level;
product flows are to fulfil predetermined production targets.

**5.** The method according to any one of the preceding claims, wherein the optimisation problem is solved and the optimised sizes and/or the optimised operation conditions are determined in advance for a predetermined time of operation of the power-to-X-system (100) and/or online during operation of the power-to-X-system (100).

**6.** The method according to any one of the preceding claims, wherein the power-to-X-system (100) is configured to generate and/or process electric energy from renewable, non-renewable or mixed energy sources and to convert the generated electric energy into hydrogen and/or ammonia and/or a synthetic fuel as the energy conversion product.

**7.** The method according to any one of the preceding claims, wherein the power-to-X-system (100) comprises one or several of the following subsystems:

a renewable energy conversion unit (102, 104) configured to generate electric energy from renewable energy sources;
a battery unit (106) configured to store electric energy;
a gas separation unit (116) configured to separate individual gases from a gas mixture, particularly an air separation unit configured to separate nitrogen, oxygen and rare gases from air;
a hydrogen generation unit (112) configured to generate hydrogen, particularly an electrolysis unit configured to generate hydrogen and oxygen;
a hydrogen storage unit (114) configured to store hydrogen;
a nitrogen storage unit (118) configured to store nitrogen;
an ammonia generation unit (124) configured to generate ammonia;
an ammonia storage unit (126) configured to store ammonia;
an e-fuel generation unit configured to generate a synthetic fuel;
an e-fuel storage unit configured to store a synthetic fuel.

**8.** A computing unit comprising means for performing a method according to any one of the preceding claims.

**9.** A computer program that causes a computing unit to perform a method according to any one of claims 1 to 7 when executed on the computing unit.

**10.** A machine-readable storage medium having stored thereon a computer program according to claim 9.

Fig. 1

208

206

204

202

Fig. 2

Europäisches
Patentamt
European
Patent Office
Office européen
des brevets

# EUROPEAN SEARCH REPORT

Application Number

EP 22 02 0581

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ULLAH MEHAR ET AL: "Operation of Power-to-X-Related Processes Based on Advanced Data-Driven Methods: A Comprehensive Review", ENERGIES, [Online] vol. 15, no. 21, 31 October 2022 (2022-10-31), pages 1-17, XP093042933, DOI: 10.3390/en15218118 Retrieved from the Internet: URL:https://www.mdpi.com/1996-1073/15/21/8118/pdf> [retrieved on 2023-05-05] * abstract * * page 5 - page 6 * * page 10 - page 13 * ----- | 1-10 | INV. G06Q10/04 G06Q30/0202 G06Q50/06 |
| A | Anonymous: "Power-to-X – Wikipedia", , 12 November 2022 (2022-11-12), pages 1-4, XP093044853, Retrieved from the Internet: URL:https://en.wikipedia.org/w/index.php?title=Power-to-X&oldid=1121537154 [retrieved on 2023-05-08] * the whole document * ----- | 1-10 | |

TECHNICAL FIELDS
SEARCHED      (IPC)

G06Q

The present search report has been drawn up for all claims

| Place of search | Date of completion of the search | Examiner |
|---|---|---|
| Munich | 8 May 2023 | Härdeman, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)